# EUROPEAN PATENT APPLICATION

(11) **EP 4 485 358 A1**
(43) Date of publication of application: **01.01.2025**
(21) Application number: 23803794.9
(22) Date of filing: 09.05.2023
(51) Int. Cl.: G06T 7/70, G06T 7/30, G06V 20/64, G06N 3/045, G06N 3/098, G06N 3/047, G06T 7/20, H04N 13/207

(54) **ELECTRONIC DEVICE FOR AUGMENTING TRAINING DATA, AND CONTROL METHOD THEREFOR**

(30) Priority: 09.05.2022 KR 20220056864; 19.12.2022 KR 20220178747
(71) Applicant: Samsung Electronics Co., Ltd, Suwon-si, Gyeonggi-do 16677 (KR)
(72) Inventor: KIM, Jiman, Suwon-si Gyeonggi-do 16677 (KR); KIM, Yehoon, Suwon-si Gyeonggi-do 16677 (KR); SEO, Chanwon, Suwon-si Gyeonggi-do 16677 (KR)
(74) Representative: Appleyard Lees IP LLP
(86) International application number: PCT/KR2023/006239
(87) International publication number: WO 2023/219371

(57) **Abstract**

The present disclosure provides an electronic device and a control method therefor. The electronic device according to one embodiment of the present disclosure comprises: a memory for storing a first training data set including, in pairs, a plurality of pieces of 2D pose data and a plurality of pieces of 3D pose data corresponding to each of the plurality of pieces of 2D pose data; and one or more processors for training, on the basis of the first training data set, a first neural network model so as to estimate 3D poses. The one or more processors augment the first training data set so as to obtain an augmented data set, select, on the basis of the similarity and/or reliability of 3D pose augmented data included in the obtained augmented data set, at least one piece of 3D pose augmented data from among a plurality of pieces of the 3D pose augmented data included in the augmented data set, obtain a second training data set including, in pairs, the selected 3D pose augmented data and 2D pose augmented data corresponding to the selected 3D pose augmented data included in the augmented data set, and retrain the first neural network model on the basis of the obtained second training data set.

## Description

### [Technical Field]

The disclosure relates to an electronic device that trains a neural network model, and a control method therefor, and more particularly, to an electronic device that obtains retraining data that can be used in retraining a neural network model by augmenting training data that was used in training the neural network model, and a control method therefor.

### [Background Art]

Recently, as electronic technologies have been developed, deep learning models are being used in various models. For example, a speaker recognizes a user's voice based on a deep learning model, and outputs a response corresponding to the user voice or transmits a control command corresponding to the user voice to an ambient IoT electronic device. Alternatively, a robot recognizes an object around the robot based on a deep learning model, and drives without a collision with the object.

In the case of such a deep learning model, its performance may vary according to training data. In particular, according to the type of training data used in training a deep learning model, an output value that is to be output by the deep learning model may be determined. Also, as the amount of training data is larger, and the quality of the training data is better, accuracy of an output value that is estimated and output by a deep learning model becomes higher. Therefore, it is necessary to prepare appropriate training data according to the form of usage of a deep learning model, and at the same time, secure a large amount of training data with good quality.

### [Disclosure]

### [Technical Solution]

An electronic device according to an embodiment of the disclosure includes memory and one or more processors. The memory stores a first training data set including, in pairs, a plurality of pieces of 2D pose data and a plurality of pieces of 3D pose data corresponding to each of the plurality of pieces of 2D pose data. The one or more processors train a first neural network model to estimate 3D poses based on the first training data set. Also, the one or more processors obtain an augmented data set by augmenting the first training data set. In addition, based on at least one of similarity or reliability of 3D pose augmented data included in the obtained augmented data set, the one or more processors select at least one piece of 3D pose augmented data among a plurality of pieces of 3D pose augmented data included in the augmented data set. Further, the one or more processors obtain a second training data set including, in pairs, the selected 3D pose augmented data and 2D pose augmented data corresponding to the selected 3D pose augmented data included in the augmented data set. Also, the one or more processors retrain the first neural network model based on the obtained second training data set.

A control method for an electronic device according to an embodiment of the disclosure includes the step of training a first neural network model to estimate 3D poses based on a first training data set including, in pairs, a plurality of pieces of 2D pose data and a plurality of pieces of 3D pose data corresponding to each of the plurality of pieces of 2D pose data. Also, the control method includes the step of obtaining an augmented data set by augmenting the first training data set. In addition, the control method includes the step of, based on at least one of similarity or reliability of 3D pose augmented data included in the obtained augmented data set, selecting at least one piece of 3D pose augmented data among a plurality of pieces of 3D pose augmented data included in the augmented data set. Further, the control method includes the step of obtaining a second training data set including, in pairs, the selected 3D pose augmented data and 2D pose augmented data corresponding to the selected 3D pose augmented data included in the augmented data set. Also, the control method includes the step of retraining the first neural network model based on the obtained second training data set.

Meanwhile, computer instructions making a control method for an electronic device according to an embodiment of the disclosure performed in case the control method for an electronic device is executed by a processor of the electronic device may be stored in a non-transitory computer-readable recording medium. Here, the control method includes the step of training a first neural network model to estimate 3D poses based on a first training data set including, in pairs, a plurality of pieces of 2D pose data and a plurality of pieces of 3D pose data corresponding to each of the plurality of pieces of 2D pose data. Also, the control method includes the step of obtaining an augmented data set by augmenting the first training data set. In addition, the control method includes the step of, based on at least one of similarity or reliability of 3D pose augmented data included in the obtained augmented data set, selecting at least one piece of 3D pose augmented data among a plurality of pieces of 3D pose augmented data included in the augmented data set. Further, the control method includes the step of obtaining a second training data set including, in pairs, the selected 3D pose augmented data and 2D pose augmented data corresponding to the selected 3D pose augmented data included in the augmented data set. Also, the control method includes the step of retraining the first neural network model based on the obtained second training data set.

### [Description of Drawings]

FIG. 1 is an exemplary diagram of an electronic device selecting training data to be used in retraining in an augmented data set obtained by augmenting a training data set according to an embodiment of the disclosure;
FIG. 2 is a schematical constitution diagram of an electronic device according to an embodiment of the disclosure;
FIG. 3 is an exemplary diagram illustrating a training data set according to an embodiment of the disclosure;
FIG. 4A and FIG. 4B are exemplary diagrams illustrating a method of augmenting a training data set according to an embodiment of the disclosure;
FIG. 5 is an exemplary diagram illustrating a method of selecting 3D pose augmented data in an augmented data set based on a distribution function of 3D pose data included in a first training data set according to an embodiment of the disclosure;
FIG. 6 is an exemplary diagram illustrating a method of selecting 3D pose augmented data in an augmented data set based on a first neural network model according to an embodiment of the disclosure;
FIG. 7 is an exemplary diagram illustrating a method of estimating a pose of an object included in an image according to an embodiment of the disclosure;
FIG. 8 is a detailed constitution diagram of an electronic device according to an embodiment of the disclosure; and
FIG. 9 is a sequence diagram schematically illustrating a method for controlling an electronic device according to an embodiment of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, and/or alternatives of the embodiments of the disclosure. Meanwhile, with respect to the detailed description of the drawings, similar components may be designated by similar reference numerals.

Also, in describing the disclosure, in case it is determined that detailed explanation of related known functions or components may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used just to explain specific embodiments of the disclosure, and are not intended to limit the scope of the other embodiments. In addition, singular expressions include plural expressions, unless defined obviously differently in the context.

Also, in the disclosure, expressions such as "have," "may have," "include," and "may include" should be construed as denoting that there are such characteristics (e.g.: elements such as numerical values, functions, operations, and components), and the terms are not intended to exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may be used to describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to" and "capable of," depending on cases. Meanwhile, the term "configured to" may not necessarily mean that a device is "specifically designed to" in terms of hardware.

Instead, under some circumstances, the expression "a device configured to" may mean that the device "is capable of' performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, in the embodiments of the disclosure, `a module' or `a part' performs at least one function or operation, and may be implemented as hardware or software, or implemented as a combination of hardware and software. In addition, a plurality of 'modules' or 'parts' may be integrated into at least one module and implemented as at least one processor, except `a module' or `a part' that needs to be implemented as specific hardware.

Meanwhile, various elements and areas in drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings, such that a person having ordinary knowledge in the technical field to which the disclosure belongs can easily carry out the embodiments.

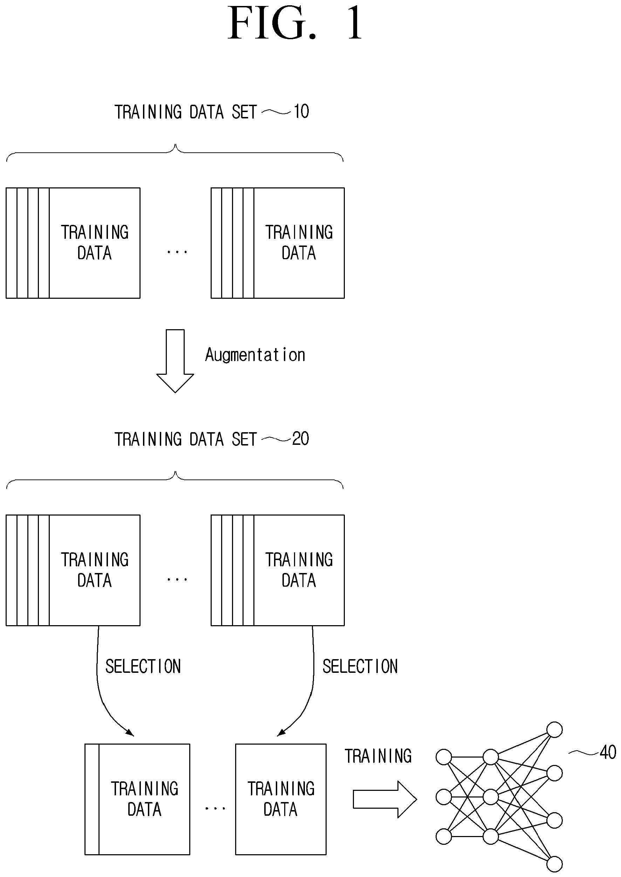

FIG. 1 is an exemplary diagram of an electronic device selecting training data to be used in retraining in an augmented data set obtained by augmenting a training data set according to an embodiment of the disclosure.

A neural network model (or, it may be referred to as a deep learning model, etc.) is trained based on training data. Specifically, a user may input input data included in training data into a neural network model, and apply a back propagation algorithm to a plurality of hidden layers included in the neural network model based on output data included in the training data, and obtain weight values for each of the plurality of hidden layers included in the neural network model. Ultimately, the neural network model may output various result values according to the training data used in training the neural network model.

However, in case the amount of training data is not sufficient, the performance of the neural network model may deteriorate. This is because, in case the amount of training data is small, the training process is stopped before obtaining appropriate weight values for each of the plurality of hidden layers included in the neural network model. Accordingly, in such a case, new training data is obtained by augmenting the training data. For example, in case the training data is an image, new training data may be obtained from the previous training data by rotating, cropping, enlarging, or reducing the image.

However, in a case of augmenting training data as above, training data in poor quality may be obtained together. Training data in poor quality may include data having insufficient relevance to the training purpose of the neural network model, data that was processed wrongly, or general raw data. Accordingly, a method for obtaining training data in good quality at the same time as increasing the amount of the training data by augmenting the training data is required.

An electronic device 100 according to an embodiment of the disclosure obtains new training data 20 by augmenting the previous training data 10 for resolving such a task, and selects only training data in good quality in the obtained new training data 20. That is, for training a neural network model 40, the electronic device 100 does not use all of the new training data 20 obtained by augmenting the previous training data 10, but selects only training data appropriate for training the neural network model 40 in the new training data 20. Through this, the electronic device 100 secures optimal training data for training the neural network model 40.

Hereinafter, an embodiment of the disclosure related to this will be explained.

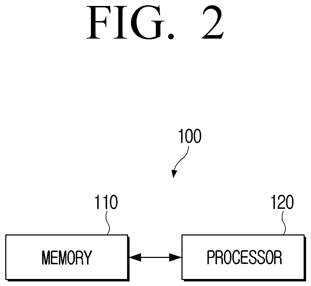

FIG. 2 is a schematical constitution diagram of the electronic device 100 according to an embodiment of the disclosure.

The electronic device 100 according to an embodiment of the disclosure includes memory 110 and one or more processors.

The memory 110 stores one or more neural network models and a training data set. Here, the one or more neural network models may include a neural network model that was trained in advance to estimate 3D pose data from 2 dimension (D) pose data. Here, if 2D pose data is input, the neural network model that was trained in advance to estimate 3D pose data from 2D pose data may output 3D pose data corresponding to the input 2D pose data. Hereinafter, the neural network model that was trained in advance to estimate 3D pose data from 2D pose data will be referred to as a first neural network model, for the convenience of explanation of the disclosure.

For the first neural network model used in the disclosure, various networks such as a deep neural network (DNN), a convolutional neural network (CNN), a recurrent neural network (RNN), a restricted Boltzmann machine (RBM), a deep belief network (DBN), deep Q-networks (DQN), etc. may be used.

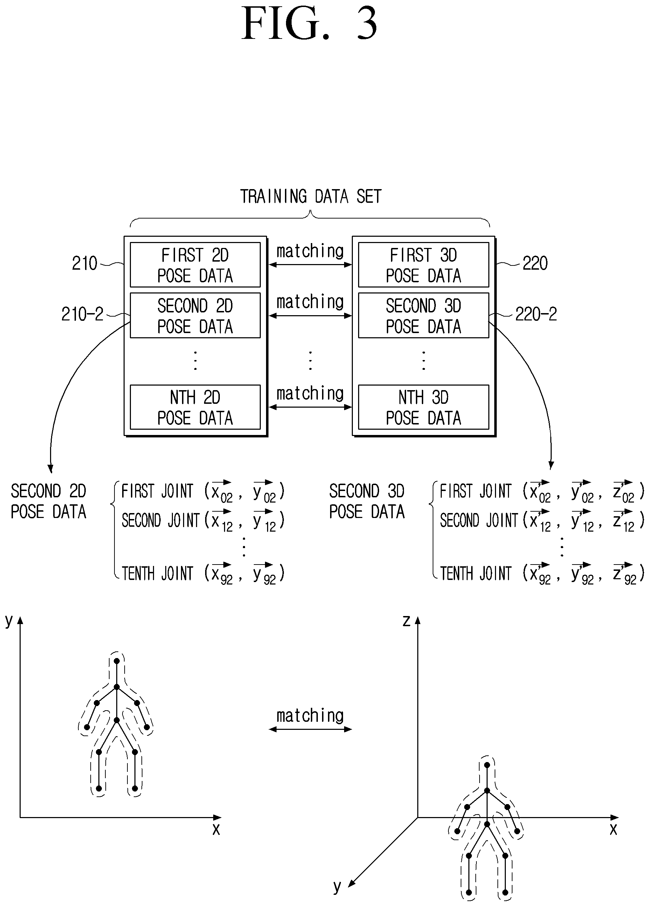

The training data set may be a training data set that was used for training the first neural network model. Specifically, in the training data set, a plurality of pieces of training data wherein 2D pose data and 3D pose data corresponding to the 2D pose data constitute pairs may be included. The training data set will be described in detail in FIG. 3.

Other than the above, the memory 110 may store data that is necessary for various embodiments relating to the electronic device 100 of the disclosure or various kinds of data that is used in driving the electronic device 100. The memory 110 may be implemented in a form of a memory 110 embedded in the electronic device 100, or implemented in a form of a memory 110 that can be attached to or detached from the electronic device 100 according to the usage of stored data. For example, in the case of data for driving the electronic device 100, the data may be stored in the memory 110 embedded in the electronic device 100, and in the case of data for an extended function of the electronic device 100, the data may be stored in the memory 110 that can be attached to or detached from the electronic device 100.

Meanwhile, in the case of the memory 110 embedded in the electronic device 100, the memory 110 may be implemented as at least one of a volatile memory (e.g.: a dynamic RAM (DRAM), a static RAM (SRAM), or a synchronous dynamic RAM (SDRAM), etc.) or a non-volatile memory (e.g.: an one time programmable ROM (OTPROM), a programmable ROM (PROM), an erasable and programmable ROM (EPROM), an electrically erasable and programmable ROM (EEPROM), a mask ROM, a flash ROM, a flash memory (e.g.: NAND flash or NOR flash, etc.), a hard drive, or a solid state drive (SSD)).

Also, in the case of the memory 110 that can be attached to or detached from the electronic device 100, the memory 110 may be implemented in forms such as a memory 110 card (e.g., compact flash (CF), secure digital (SD), micro secure digital (Micro-SD), mini secure digital (Mini-SD), extreme digital (xD), a multi-media card (MMC), etc.) and an external memory that can be connected to a USB port (e.g., a USB memory 110), etc.

The one or more processors 120 according to an embodiment of the disclosure control the overall operations and functions of the electronic device 100.

The one or more processors 120 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 120 may control one or a random combination of the other components of the electronic device 100, and perform an operation related to communication or data processing. Also, the one or more processors 120 may execute one or more programs or instructions stored in the memory 110. For example, the one or more processors 120 may perform the method according to an embodiment of the disclosure by executing the one or more instructions stored in the memory 110.

In case the method according to an embodiment of the disclosure includes a plurality of operations, the plurality of operations may be performed by one processor 120, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The one or more processors 120 may be implemented as a single core processor including one core, or it may be implemented as one or more multicore processors including a plurality of cores (e.g., multicores of the same kind or multicores of different kinds). In case the one or more processors 120 are implemented as multicore processors, each of the plurality of cores included in the multicore processors may include an internal memory 110 of the processor such as a cache memory 110, an on-chip memory 110, etc., and a common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processors may mean a system on chip (SoC) wherein one or more processors and other electronic components are integrated, a single core processor 120, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

Hereinafter, the one or more processors 120 will be referred to as the processor 120, for the convenience of explanation.

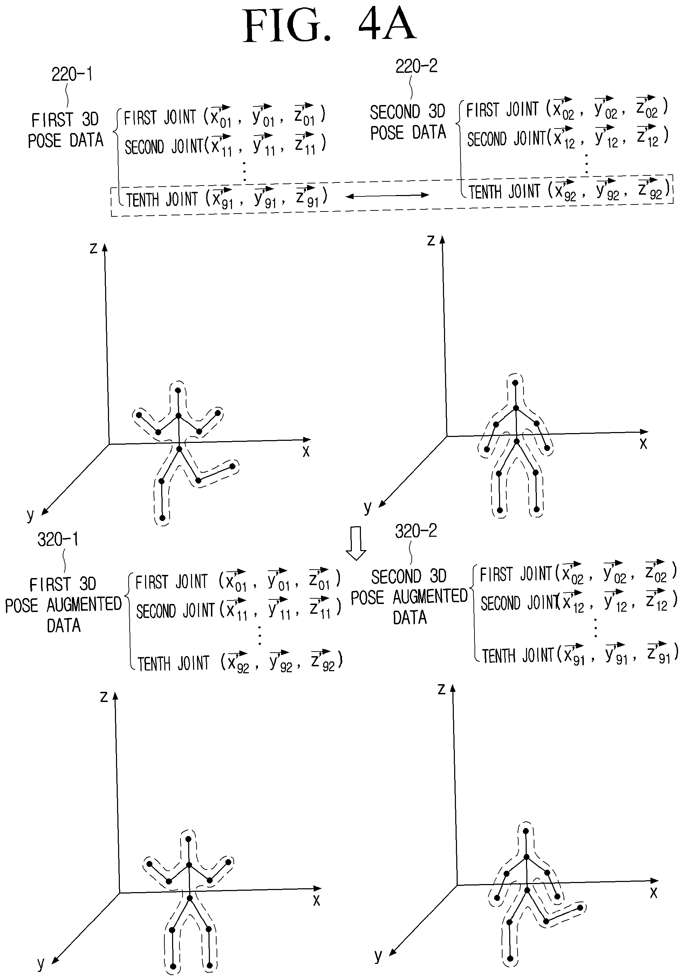

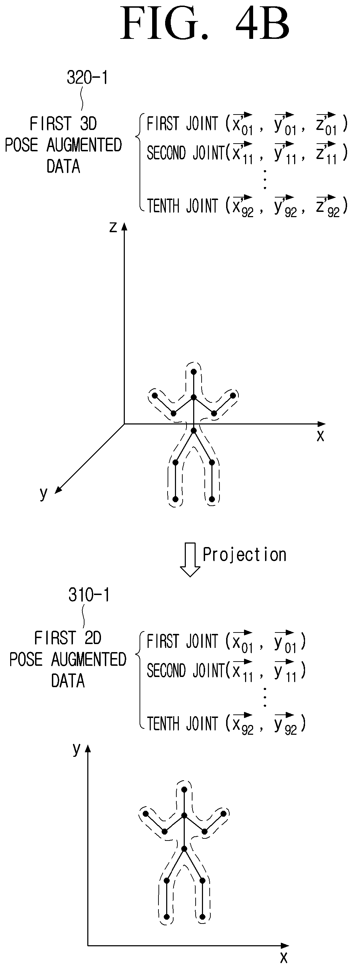

FIG. 3 is an exemplary diagram illustrating a training data set according to an embodiment of the disclosure, and FIG. 4A and FIG. 4B are exemplary diagrams illustrating a method of obtaining augmented data by augmenting a training data set according to an embodiment of the disclosure.

Referring to FIG. 3, 2D pose data 210 included in the training data set 11 may include 2D coordinate information for j oints of an object. Here, the object is an object included in an image, and the 2D pose data 210 may include 2D coordinate information for a plurality of joints constituting the object included in the image. The 2D coordinate information may be coordinate values, vector values, etc. of each of a plurality of joints constituting an object in a predetermined 2D coordinate space.

For example, in case there are ten main joints of an object, coordinate information corresponding to the ten joints may be included in the 2D pose data 210. The second 2D pose data 210-2 among the plurality of pieces of 2D pose data 210 is coordinate information for each of the ten joints (i.e., the first to tenth j oints), and may include ten pieces of coordinate information from the vector value of the first joint (*̅x̅*̅₀̅₂̅,*̅y̅*̅₀̅₂̅) to the vector value of the tenth joint (*̅x̅*̅₉̅₂̅,*̅y̅*̅₉̅₂̅).

Meanwhile, 3D pose data 220 included in the training data set 11 may include 3D coordinate information for j oints of an object. Here, the object is an object included in an image, and the 3D pose data 220 may include 3D coordinate information for a plurality of joints constituting the object included in the image. The 3D coordinate information may be coordinate values, vector values, etc. of each of a plurality of joints constituting an object in a predetermined 3D coordinate space.

For example, referring to FIG. 3, in case there are ten main joints of an object, coordinate information corresponding to the ten joints may be included in the 3D pose data 220. The second 3D pose data 220-2 among the plurality of pieces of 3D pose data 220 is coordinate information for each of the ten joints (i.e., the first to tenth joints), and may include ten pieces of coordinate information from the vector value of the first joint (*̅x̅'̅*̅₀̅₂̅,*̅y̅*̅'̅₀̅₂̅,*̅z̅*̅'̅₀̅₂̅) to the vector value of the tenth j oint (*̅x̅'̅*̅₉̅₂̅,*̅y̅'̅*̅₉̅₂̅,*̅z̅'̅*̅₉̅₂̅).

Meanwhile, in FIG. 3, it was illustrated that there are ten j oints of an object, but joints of an object may be constituted in various numbers depending on embodiments.

In the training data set 11, the plurality of pieces of 2D pose data 210 and the plurality of pieces of 3D pose data 220 may constitute pairs with one another for the same pose. For example, referring to FIG. 3, in case an object is standing, the 2D pose data 210 including 2D coordinate information for joints of the object regarding the pose of the standing object and the 3D pose data 220 including 3D coordinate information for joints of the object regarding the pose of the standing object may constitute a pair. Like this, in the training data set 11, the same object, and the 2D pose data 210 and the 3D pose data 220 regarding the pose of the same object may be included while constituting a pair.

For example, the second 2D pose data 210-2 among the plurality of pieces of 2D pose data 210 and the second 3D pose data 220-2 among the plurality of pieces of 3D pose data 220 are regarding the same object and the same pose of the same object (the pose that the object is standing), and thus the second 2D pose data 210-2 and the second 3D pose data 220-2 may be matched. That is, the second 2D pose data 210-2 and the second 3D pose data 220-2 may be included in the training data set while constituting a pair. Here, the plurality of pieces of coordinate information included in each of the second 2D pose data 210-2 and the second 3D pose data 220-2 may also be matched for the same joint. That is, the coordinate information for the first joint (*̅x̅*̅₀̅₂̅,*̅y̅*̅₀̅₂̅) among the plurality of j oints (i.e., ten j oints) included in the second 2D pose data 210-2 may be matched with the coordinate information for the first joint (*̅x̅'̅*̅₀̅₂̅, *̅y̅'̅*̅₀̅₂̅, *̅z̅'̅*̅₀̅₂̅) among the plurality of joints (i.e., ten joints) included in the second 3D pose data 220-2. Like this, each piece of coordinate information corresponding to the plurality of joints (i.e., ten joints) included in the second 2D pose data 210-2 may be matched for the same joint as each piece of coordinate information corresponding to the plurality of joints (i.e., ten joints) included in the second 3D pose data 220-2.

According to an embodiment of the disclosure, the processor 120 trains the first neural network model 41 to estimate 3D poses based on the training data set 11.

The processor 120 may train the first neural network model 41 by using the 2D pose data 210 and the 3D pose data 220 regarding the same pose. Specifically, the processor 120 may train the first neural network model 41 by inputting the 2D pose data 210 into the first neural network model 41, and using the 3D pose data 220 corresponding to the input 2D pose data 210 (or constituting a pair with the input 2D pose data 210) as an output value. Hereinafter, the training data set used in initially training the first neural network model 41 will be referred to as the first training data set 11, for the convenience of explanation of the disclosure.

Then, the processor 120 obtains an augmented data set 21 by augmenting the first training data set 11. Specifically, the processor 120 may augment the first training data set 11 by exchanging 3D coordinate information for at least one same joint among the plurality of pieces of 3D pose data 220 included in the first training data set 11.

For example, referring to FIG. 4A, the processor 120 may extract the first 3D pose data 220-1 and the second 3D pose data 220-2 among the plurality of pieces of 3D pose data 220 included in the first training data set 11. Then, the processor 120 may exchange coordinate information of at least one same joint among the pieces of 3D coordinate information regarding the plurality of joints included in the extracted first 3D pose data 220-1 and second 3D pose data 220-2. Specifically, the processor 120 may change the coordinate information for the calf (i.e., the tenth joint) (*̅x̅'̅*̅₉̅₁̅, *̅y̅'̅*̅₉̅₁̅, *̅z̅'̅*̅₉̅₁̅) included in the first 3D pose data 220-1 to the coordinate information for the calf (i.e., the tenth joint) (*̅x̅'̅*̅₉̅₂̅, *̅y̅'̅*̅₉̅₂̅, *̅z̅'̅*̅₉̅₂̅) included in the second 3D pose data 220-2, and thereby obtain the first 3D pose augmented data 320-1.

Here, in the first 3D pose augmented data 320-1, coordinate information for a new pose (i.e., the third pose) (specifically, from the vector value of the first joint (*̅x̅'̅*̅₀̅₁̅, *̅y̅'̅*̅₀̅₁̅, *̅z̅'̅*̅₀̅₁̅) to the vector value of the tenth joint (*̅x̅'̅*̅₉₂, *̅y̅'̅*̅₉̅₂̅, *̅z̅'̅*̅₉̅₂̅) different from the pose corresponding to the first 3D pose data 320-1 (i.e., the first pose) and the pose corresponding to the second 3D pose data 320-2 (i.e., the second pose) may be included. That is, the processor 120 may obtain data for a new pose (i.e., the 3D pose augmented data 320) by exchanging coordinate information for at least one joint included in each of the plurality of pieces of 3D pose data included in the first training data set 11.

Meanwhile, the processor 120 may obtain the second 3D pose augmented data 320-2 by changing the coordinate information for the calf (i.e., the tenth joint) (*̅x̅'̅*̅₉̅₂̅, *̅y̅'̅*̅₉̅₂̅, *̅z̅'̅*̅₉̅₂̅) included in the second 3D pose data 220-2 to the coordinate information for the calf (i.e., the tenth joint) (*̅x̅'̅*̅₉̅₁̅, *̅y̅'̅*̅₉̅₁̅, *̅z̅'̅*̅₉̅₁̅) included in the first 3D pose data 220-1.

Here, in the second 3D pose augmented data 320-2, coordinate information for a new pose (i.e., the fourth pose) (specifically, from the vector value of the first joint (*̅x̅'̅*̅₀̅₂̅, *̅y̅'̅*̅₀̅₂̅, *̅z̅'̅*̅₀̅₂̅) to the vector value of the tenth joint (*̅x̅'̅*̅₉̅₁̅, *̅y̅'̅*̅₉̅₁̅, *̅z̅'̅*̅₉̅₁̅)) different from the pose corresponding to the first 3D pose data 320-1 (i.e., the first pose) and the pose corresponding to the second 3D pose data 320-2 (i.e., the second pose) may be included. Also, the pose of the second 3D pose augmented data 320-2 (i.e., the fourth pose) may be different from the pose of the first 3D pose augmented data 320-1 (i.e., the third pose).

Here, for exchanging the 3D coordinate information of the calf, the processor 120 may use the 3D coordinate information of joints connected with the calf (e.g., the thigh or the feet, etc.). Specifically, the processor 120 may match the 3D coordinate information of a joint connected with the calf and the 3D coordinate information of the calf obtained from another piece of 3D pose data 220. For example, referring to FIG. 4A again, the processor 120 may extract the 3D coordinate information of the calf included in the first 3D pose data 220-1, and match the 3D coordinate information of the calf included in the first 3D pose data 220-1 with the 3D coordinate information of the thigh connected with the calf included in the second 3D pose data 220-2, and obtain new 3D pose data (i.e., the first 3D pose augmented data 320-1). Likewise, the processor 120 may obtain new 3D pose data (i.e., the second 3D pose augmented data 320-2) from the second 3D pose data 220-2. As described above, the processor 120 may obtain new 3D pose data 320 from the 3D pose data 220 included in the previous training data set. Hereinafter, for the convenience of explanation of the disclosure, the new 3D pose data 320 will be referred to as 3D pose augmented data 320.

Meanwhile, the processor 120 may project the obtained 3D pose augmented data 320 to a 2D coordinate space, and obtain 2D pose augmented data 310 corresponding to (or constituting a pair with) the obtained 3D pose data 220. Explaining again based on the aforementioned example, the processor 120 may project the 3D coordinate information for the plurality of joints (specifically, ten joints) included in the 3D pose augmented data 320 obtained from each of the first 3D pose data 220-1 and the second 3D pose data 220-2 (e.g., the first 3D pose augmented data 320-1 and the second 3D pose augmented data 320-2) to a predetermined 2D coordinate space, and obtain 2D coordinate information for each of the plurality of joints (specifically, ten joints). Then, the processor 120 may obtain each piece of the 2D pose augmented data including the obtained 2D coordinate information for the plurality of joints (e.g., the first 2D pose augmented data 310-1 and the second 2D pose augmented data). Then, the processor 120 may match the 3D pose augmented data 320 and the 2D pose augmented data 310, and include them in an augmented data set 21.

Specifically, referring to FIG. 4B, the processor 120 may project each piece of the 3D coordinate information corresponding to each of the ten joints (from the vector value of the first joint (*̅x̅'̅*̅₀̅₁̅, *̅y̅'̅*̅₀̅₁̅, *̅z̅'̅*̅₀̅₁̅) to the vector value of the tenth joint (*̅x̅'̅*̅₉̅₂̅, *̅y̅'̅*̅₉̅₂̅, *̅z̅'̅*̅₉̅₂̅) included in the first 3D pose augmented data 320-1 to a predetermined 2D coordinate space, and obtain coordinate information corresponding to each of the ten joints (from the 2D vector value of the first joint (*̅x̅*̅₀̅₁̅, *̅y̅*̅₀̅₁̅) to the 2D vector value of the tenth joint (*̅x̅*̅₉̅₂̅, *̅y̅*̅₉̅₂̅)).

As described above, the processor 120 may obtain the augmented data set 21 including new 2D pose data (more specifically, the 2D pose augmented data 310) and new 3D pose data (specifically, the 3D pose augmented data 320) that was obtained by augmenting the 3D pose data 220 used in training the first neural network model 41.

Then, the processor 120 selects at least one piece of 3D pose augmented data among the plurality of pieces of 3D pose augmented data 320 included in the augmented data set 21 based on at least one of similarity or reliability of the 3D pose augmented data 320 included in the obtained augmented data set 21.

Specifically, the processor 120 selects training data to be used in retraining the first neural network model 41 among the plurality of pieces of training data included in the augmented data set 21 (more specifically, the pieces of training data consisting of pairs of the 2D pose augmented data 310 and the 3D pose augmented data 320).

For this, the processor 120 identifies each of the similarity and the reliability of the plurality of pieces of 3D pose augmented data 320 included in the augmented data set 21, and selects 3D pose augmented data to be used in retraining the first neural network model 41 among the plurality of pieces of 3D pose augmented data 320 based on the identified similarity and reliability. Here, the processor 120 also selects 2D pose augmented data corresponding to the selected 3D pose augmented data together.

According to an embodiment of the disclosure, the processor 120 may select 3D pose augmented data having low similarity with the plurality of pieces of 3D pose data 220 included in the previous first training data set 11 among the plurality of pieces of 3D pose augmented data 320 included in the augmented data set 21. This is for training the first neural network model 41 to be able to identify more various poses, by selecting 3D pose augmented data for a pose different from the pose used in training the first neural network model 41 (i.e., a pose having low similarity).

Also, according to an embodiment of the disclosure, the processor 120 may select 3D pose augmented data having high reliability among the plurality of pieces of 3D pose augmented data 320 included in the augmented data set 21. This is for making the first neural network model 41 output the 3D pose data 220 regarding a pose of an object more correctly, by training the first neural network model 41 based on the selected 3D pose augmented data 320 having high reliability. That is, it is for heightening the reliability for the first neural network model 41.

Meanwhile, the processor 120 retrains the first neural network model 41 based on the 3D pose augmented data 320 selected from the augmented data set 21 and the 2D pose augmented data 310 on the basis of at least one of similarity or reliability. Specifically, the processor 120 may generate training data by matching the 3D pose augmented data 320 selected from the augmented data set 21 and the 2D pose augmented data 310 corresponding to the selected 3D pose data 220 based on at least one of similarity or reliability, and obtain a new training data set including the generated training data. Then, the processor 120 may retrain the first neural network model 41 that was trained in advance based on the obtained new training data set. Hereinafter, for the convenience of explanation of the disclosure, the new training data set will be referred to as the second training data set 12.

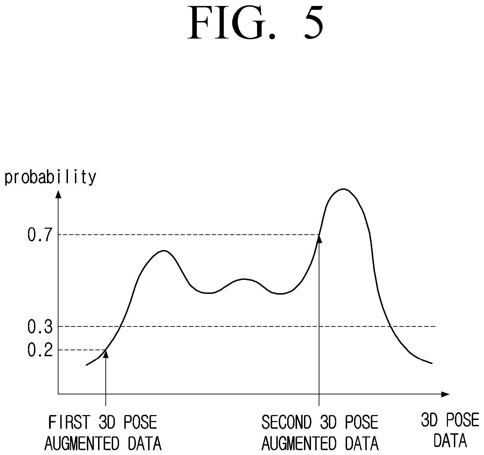

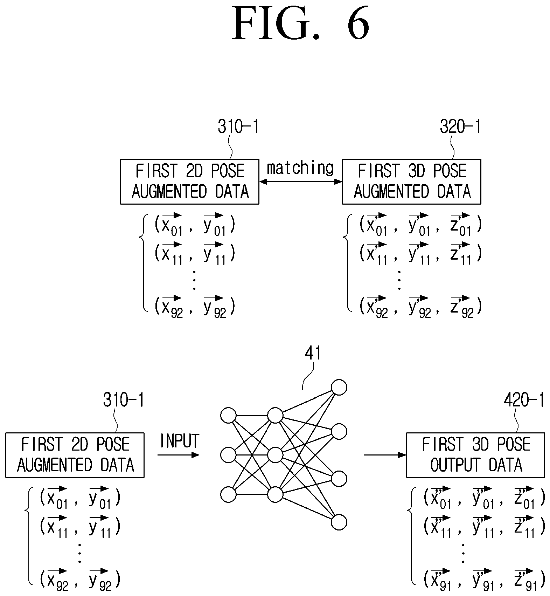

FIG. 5 is an exemplary diagram illustrating a method of selecting 3D pose augmented data in the augmented data set 21 based on a distribution function of the 3D pose data 220 included in the first training data set 11 according to an embodiment of the disclosure. FIG. 6 is an exemplary diagram illustrating a method of selecting 3D pose augmented data in the augmented data set 21 based on the first neural network model 41 according to an embodiment of the disclosure.

Hereinafter, a method of selecting training data that was used in retraining in the augmented data set 21 will be explained.

As an example, the processor 120 may obtain a distribution function of the plurality of pieces 3D pose data 220 included in the first training data set 11, and obtain a distribution probability value for a training data set of the plurality of pieces of 3D pose augmented data 320 included in the augmented data set 21 based on the obtained distribution function. Here, the processor 120 may identify the similarity with the first training data set 11 to be higher as the distribution probability value is higher.

Specifically, the processor 120 may obtain a distribution function for the plurality of pieces of 3D pose data 220 included in the first training data set 11. As an example, the distribution function for the 3D pose data 220 may be a probability density function of each pose included in the training data set. Accordingly, an output value of the distribution function may be a probability value (or a distribution probability value) for each pose.

For example, a distribution function for the 3D pose data 220 may be a function indicating the degree of distribution for 3D coordinate information regarding a plurality of joints included in the 3D pose data 220 corresponding to each pose. That is, a distribution function for the 3D pose data 220 may be a probability density function of 3D coordinate information regarding a plurality of joints corresponding to each pose. In case the 3D pose data 220 includes 3D coordinate information for ten joints of an object, the distribution function may be a 27-dimensional function for x, y, z coordinate values of each of the ten joints. Here, the processor 120 may reduce the 27-dimensional function to a two-dimensional or three-dimensional function by using a principal component analysis (PCA) algorithm or a t-stochastic neighbor embedding (t-SNE) algorithm. Meanwhile, in FIG. 5, for the convenience of explanation of the disclosure, it was illustrated that a distribution function for the plurality of pieces of 3D pose data 220 is two-dimensional.

The processor 120 may obtain a probability value of a pose corresponding to each piece of the 3D pose augmented data 320 based on an obtained distribution function. Specifically, referring to FIG. 5, the processor 120 may obtain a probability value for each piece of the 3D pose augmented data 320 by inputting each of the plurality of pieces of 3D pose augmented data 320 included in the augmented data set 21 into a distribution function obtained based on the first training data set 11.

Then, the processor 120 may identify similarity of each piece of 3D pose augmented data 320 to the first training data set 11 based on the obtained probability value. Specifically, as the probability value of the 3D pose augmented data 320 is smaller, the processor 120 may identify that the similarity of the 3D pose augmented data 320 to the plurality of pieces of 3D pose data 220 included in the first training data set 11 is lower. In contrast, as the probability value of the 3D pose augmented data 320 is bigger, the processor 120 may identify that the similarity of the 3D pose augmented data 320 to the plurality of pieces of 3D pose data 220 included in the first training data set 11 is higher.

Here, for selecting 3D pose augmented data regarding more various poses which are different from poses included in the previous first training data set 11, the processor 120 may select only pieces of 3D pose augmented data wherein the distribution probability value is smaller than a predetermined first value among the plurality of pieces of 3D pose augmented data 320. Referring to FIG. 5 again, when it is assumed that the predetermined first value is 0.3, the processor 120 may select only pieces of 3D pose augmented data wherein the probability value is smaller than 0.3 among the plurality of pieces of 3D pose augmented data 320 included in the augmented data set 21. As an example, in the case of the first 3D pose augmented data 320-1, as the probability value is 0.2 which is smaller than 0.3, the processor 120 may select the first 3D pose augmented data 320-1, but in the case of the second 3D pose augmented data 320-2, as the probability value is 0.7 which is bigger than 0.3, the processor 120 may not select the second 3D pose augmented data 320-2.

Then, the processor 120 may identify and select the 2D pose augmented data 310 corresponding to the selected 3D pose augmented data 320, and match the selected 3D pose augmented data 320 and 2D pose augmented data 310, and generate new training data.

Meanwhile, the processor 120 may input each of the plurality of pieces of 2D pose augmented data 310 included in the augmented data set 21 into the first neural network model 41, and obtain each of a plurality of pieces of 3D pose output data 420 corresponding to each piece of the 2D pose augmented data 310, and identify the reliability of each piece of the 3D pose augmented data 320 corresponding to each of the plurality of pieces of 2D pose augmented data 310 based on the obtained plurality of pieces of 3D pose output data 420.

Specifically, the processor 120 may input the plurality of pieces of 2D pose augmented data 310 included in the augmented data set 21 into the first neural network model 41 that was trained in advance, and obtain output values corresponding to each piece of the 2D pose augmented data 310. Here, the output values obtained by the processor 120 may be 3D pose data 220 that was estimated based on each piece of the 2D pose augmented data 310 input into the first neural network model 41. Specifically, the processor 120 may obtain 3D coordinate information for each of a plurality of joints of an object that was estimated based on the 2D coordinate information for each of the plurality of joints of the object included in the 2D pose augmented data 310.

Meanwhile, the processor 120 may obtain each piece of the 3D pose output data 420 that was obtained by inputting each piece of the 2D pose augmented data 310 into the first neural network model 41, and then compare the obtained each piece of 3D pose output data 420 and each piece of the 3D pose augmented data 320 corresponding to each piece of the 2D pose augmented data 310 included in the augmented data set 21, and thereby identify the reliability of each piece of the 3D pose augmented data 320.

For example, referring to FIG. 6, the processor 120 may obtain the first 3D pose output data 420-1 which is an output value for the first 2D pose augmented data 310-1 by inputting the first 2D pose augmented data 310-1 among the plurality of pieces of 2D pose augmented data 310 included in the augmented data set 21 into the first neural network model 41. Then, the processor 120 may obtain the first 3D pose augmented data 320-1 which is matched (or constitutes a pair) with the first 2D pose augmented data 310-1 in the augmented data set 21, and compare the obtained first 3D pose augmented data 320-1 and the first 3D pose output data 420-1. Here, if it is identified, as a result of comparing the first 3D pose augmented data 320-1 and the first 3D pose output data 420-1, that the degree that the first 3D pose augmented data 320-1 and the first 3D pose output data 420-1 are different is big, the processor 120 may identify that the reliability of the first 3D pose augmented data 320-1 that was obtained by augmenting the first training data set 11 deteriorated. Then, the processor 120 may not select the first 3D pose augmented data 320-1 of which reliability deteriorated in generating the second training data set 12 for training the first neural network model 41 later. That is, the first 3D pose augmented data 320-1 may be excluded from the second training data set 12.

As an example, the processor 120 may identify an error between the 3D pose augmented data 320 and the 3D pose output data 420, and identify the reliability of the 3D pose augmented data 320 based on the identified error. Specifically, the processor 120 may identify an error between the between the 3D pose output data 420 and the 3D pose augmented data 320 corresponding to the same 2D pose augmented data 310.

For example, the processor 120 identifies each of the features of the 3D pose output data 420 and the 3D pose augmented data 320 corresponding to the same 2D pose augmented data 310, and embeds each extracted feature into a three-dimensional vector. The processor 120 may obtain three-dimensional vectors corresponding to the features of the 3D pose output data 420 and the 3D pose augmented data 320 based on the t-stochastic neighbor embedding (t-SNE) algorithm. Then, the processor 120 may identify the three-dimensional vectors in a 3D space, and identify a Euclidean distance between a vector corresponding to the 3D pose output data 420 and a vector corresponding to the 3D pose augmented data 320. Then, the processor 120 may identify the identified Euclidean distance as an error value of the 3D pose augmented data 320 for the 3D pose output data 420.

Meanwhile, as the identified error is smaller, the processor 120 may identify that the reliability of each piece of the 3D pose output data 420 is higher. That is, explaining again based on the aforementioned example, as the Euclidean distance between the vector corresponding to the 3D pose output data 420 and the vector corresponding to the 3D pose augmented data 320 is smaller, the processor 120 may identify that the reliability of the 3D pose augmented data 320 is higher.

Further, the processor 120 may select pieces of 3D pose augmented data wherein the error is smaller than a predetermined second value among the plurality of pieces of 3D pose augmented data 320. That is, the processor 120 may identify that the reliability of 3D pose augmented data having an error smaller than the predetermined second value is high.

Meanwhile, the processor 120 may obtain 3D pose data 220 to be included in the second training data set 12 based on similarity and reliability. Specifically, the processor 120 may calculate a score corresponding to similarity and reliability, and select 3D pose augmented data based on the calculated score.

In particular, the processor 120 may calculate a score corresponding to each piece of the 3D pose augmented data 320 based on a distribution probability value corresponding to similarity and an error corresponding to reliability. For example, the processor 120 may calculate a score corresponding to each piece of the 3D pose augmented data 320 by summing up a distribution probability value and an error value. However, the disclosure is not limited thereto, and the processor 120 may calculate a score corresponding to each piece of the 3D pose augmented data 320 by using a linear combination, an inner product, etc. of vectors corresponding to each of a probability value and an error.

Meanwhile, in the case of calculating a score corresponding to each piece of the 3D pose augmented data 320 by summing up a distribution probability value and an error value, the processor 120 may align the plurality of pieces of 3D pose augmented data 320 in the order of having a lower score based on the calculated score, and select the plurality of pieces of 3D pose augmented data within a predetermined range among the aligned plurality of pieces of 3D pose augmented data 320. For example, the processor 120 may align the plurality of pieces of 3D pose augmented data 320 in the order of having a lower score, and then select only the plurality of pieces of 3D pose augmented data 320 which belong to the top 10%.

Meanwhile, the second training data set 12 according to an embodiment of the disclosure may correspond to augmentation of the first training data set 11 in a scale of 1.29 times.

Specifically, the number of the pairs of the 2D pose augmented data 310 and the 3D pose augmented data 320 included in the second training data set 12 may be 1.29 times of the number of the pairs of the 2D pose augmented data 310 and the 3D pose augmented data 320 included in the first training data set 11. For example, in case the number of the pairs of the 2D pose augmented data 310 and the 3D pose augmented data 320 included in the first training data set 11 is 1000, the number of the pairs of the 2D pose augmented data 310 and the 3D pose augmented data 320 included in the second training data set 12 may be 1290.

For this, the processor 120 may select the 2D pose augmented data and the 3D pose augmented data in the augmented data set 21 such that the second training data set 12 becomes a scale of 1.29 times of the first training data set 11.

In particular, the processor 120 may obtain another augmented data set by augmenting again the 3D pose augmented data 320 included in the augmented data set 21 obtained by augmenting the first training data set 11. That is, in case the augmented data set 21 obtained by augmenting the first training data set 11 is referred to as a primary augmented data set, the processor 120 may obtain another piece of 3D pose augmented data by exchanging the 3D coordinate information regarding at least one joint among the pieces of 3D coordinate information regarding a plurality of joints of an object included in the 3D pose augmented data 320 included in the primary augmented data set with each other. Then, the processor 120 may project the pieces of 3D coordinate information regarding the plurality of joints included in the obtained 3D pose augmented data to a predetermined 2D coordinate space, and obtain pieces of 2D pose augmented data corresponding to each piece of the 3D pose augmented data. As described above, the processor 120 may obtain a secondary augmented data set including another plurality of pieces of 3D pose augmented data obtained based on the 3D pose augmented data included in the primary augmented data set and a plurality of pieces of 2D pose augmented data respectively corresponding thereto.

The processor 120 may repeatedly obtain the augmented data set 21 until the second training data set becomes a scale of 1.29 times of the first training data set. That is, if the size of the second training data including the 3D pose augmented data 320 selected in the primary augmented data set does not correspond to a scale of 1.29 times of the size of the first training data set 11 based on at least one of reliability or similarity, the processor 120 may generate the secondary augmented data set by augmenting the primary augmented data set. Then, the processor 120 may select 3D pose augmented data to be included in the second training data in the generated secondary augmented data set based on at least one of reliability or similarity.

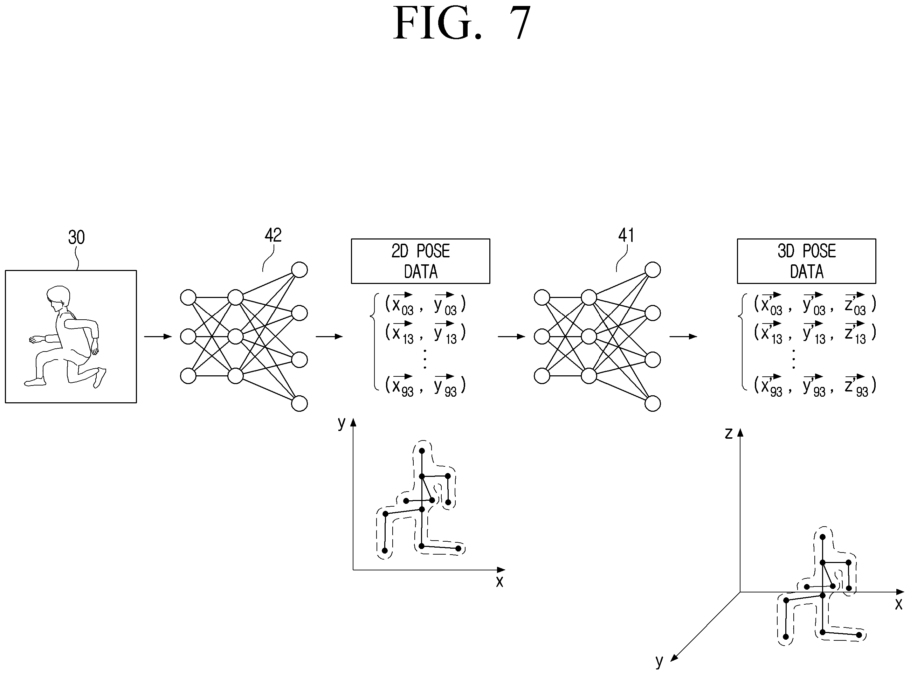

FIG. 7 is an exemplary diagram illustrating a method of estimating a pose of an object included in an image according to an embodiment of the disclosure.

Meanwhile, the processor 120 may retrain the first neural network model 41 based on the second training data set 12, and then obtain an image 30 including an object, and input the obtained image 30 into the second neural network model 42 trained to estimate 2D pose data 210 of the object in the image, and thereby obtain the 2D pose data 210 corresponding to the image 30.

Here, the second neural network model 42 may be a neural network model that was trained to recognize an object in the 2D image 30, and estimate and output the 2D pose data 210 of the recognized object. For this, the processor 120 may train the second neural network model 42 based on the third training data set 13 including the plurality of images 30 including objects and 2D pose data 210 corresponding to the objects included in each of the plurality of images 30 in pairs. Here, in the 2D pose data 210, 2D coordinate information regarding a plurality of joints constituting the objects included in each image may be included.

Accordingly, referring to FIG. 7, if the processor 120 inputs an image including an object into the second neural network model 42 trained in advance, the second neural network model 42 trained in advance may recognize the object included in the image, identify a plurality of joints of the recognized object, and estimate and output the 2D coordinate information of each of the plurality of identified joints.

For the second neural network model 42 used in the disclosure, various networks such as a deep neural network (DNN), a convolutional neural network (CNN), a recurrent neural network (RNN), a restricted Boltzmann machine (RBM), a deep belief network (DBN), deep Q-networks (DQN), etc. may be used.

Then, the processor 120 may input the obtained 2D pose data 210 into the retrained first neural network model 41 and obtain 3D pose data 220 corresponding to the 2D pose data 210, and identify a pose of the object in the image based on the obtained 3D pose data 220. For example, the processor 120 may obtain the 3D pose data 220 by inputting the 2D pose data regarding the object in the image that was obtained as an output value of the second neural network model 42 into the first neural network model 41. Here, the processor 120 may identify the pose of the object based on the 3D coordinate information regarding the plurality of joints included in the obtained 3D pose data 220. That is, referring to FIG. 7, the processor 120 may identify that the object in the image 30 took a running pose based on the 3D coordinate information.

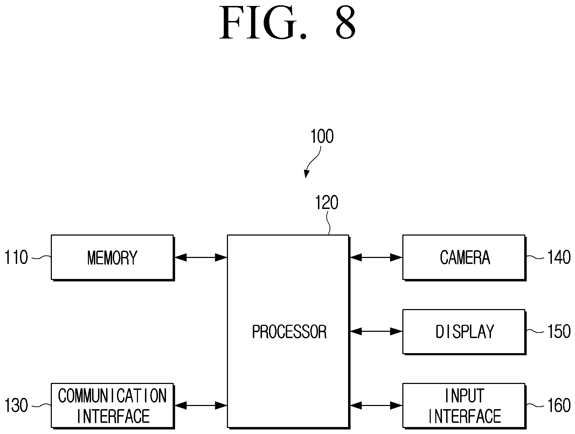

FIG. 8 is a detailed constitution diagram of the electronic device 100 according to an embodiment of the disclosure.

Referring to FIG. 8, the electronic device 100 includes memory 110, a communication interface 130, a camera 140, an input interface 150, and one or more processors 120. Among the components of the electronic device 100 illustrated in FIG. 8, regarding components that overlap with the components of the electronic device 100 illustrated in FIG. 2, detailed explanation will be omitted.

The communication interface 130 may perform communication with an external device and an external server through various communication methods. Communicative connection between the communication interface 130 and an external device and an external server may include communication through a third device (e.g., a repeater, a hub, an access point, a gateway, etc.). For example, an external device may be implemented as another electronic device, a server, a cloud storage, a network, etc. In particular, the processor 120 may receive the first training data set 11 and the third training data set from an external service interlocked with the electronic device 100 through the communication interface 130.

The communication interface 130 may include various communication modules for performing communication with an external device. As an example, the communication interface 130 may include a wireless communication module, and may include, for example, a cellular communication module using at least one of 3rd Generation (3G), 3rd Generation Partnership Project (3GPP), Long Term Evolution (LTE), LTE- Advance (LTE-A), code division multiple access (CDMA), wideband CDMA (WCDMA), a universal mobile telecommunications system (UMTS), Wireless Broadband (WiBro), or a Global System for Mobile Communications (GSM). As another example, a wireless communication module may include, for example, at least one of wireless fidelity (Wi-Fi), Bluetooth, Bluetooth Low Energy (BLE), or Zigbee.

The camera 140 may photograph an object around the electronic device 100 and obtain an image regarding the object. The image regarding an object obtained like this may be included in the third training data set and used for training the second neural network model 42.

The camera 140 may be implemented as an imaging device such as an imaging device having a CMOS structure (a CMOS image sensor (CIS)), an imaging device having a CCD structure (a charge coupled device), etc. However, the disclosure is not limited thereto, and the camera 140 may be implemented as a camera 140 module in various resolutions that can photograph an object. Meanwhile, the camera 140 may be implemented as a depth camera 140 (e.g., an IR depth camera, etc.), a stereo camera, or an RGB camera, etc.

The input interface 150 includes circuitry, and the processor 120 may receive a user instruction for controlling the operations of the electronic device 100 through the input interface 150. Specifically, the input interface 150 may include a display as a touch screen, but this is merely an example, and the input interface 150 may include components such as a button, a microphone, and a remote control signal receiver (not shown), etc.

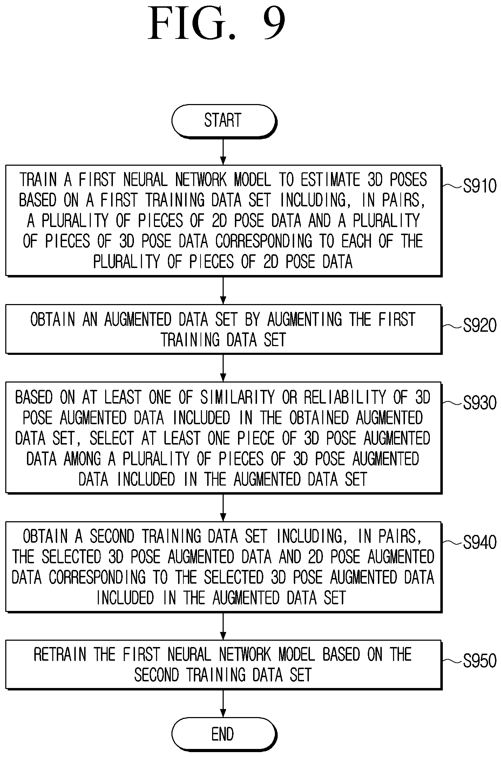

FIG. 9 is a sequence diagram schematically illustrating a method for controlling the electronic device 100 according to an embodiment of the disclosure.

For performing a method for controlling the electronic device 100 according to an embodiment of the disclosure, the processor 120 first trains the first neural network model 41 to estimate 3D poses based on the first training data set 11 including, in pairs, a plurality of pieces of 2D pose data 210 and a plurality of pieces of 3D pose data 220 corresponding to each of the plurality of pieces of 2D pose data 210 in operation S910.

Here, the 2D pose data 210 may include 2D coordinate information for each of a plurality of joints constituting an object, and the 3D pose data 220 may include 3D coordinate information for each of the plurality of joints constituting the object.

Then, the processor 120 obtains an augmented data set 21 by augmenting the first training data set 11 in operation S920. Specifically, the processor 120 may augment the first training data set 11 by exchanging 3D coordinate information for at least one same joint among the plurality of pieces of 3D pose data 220.

The processor 120 selects at least one piece of 3D pose augmented data among a plurality of pieces of 3D pose augmented data 320 included in the augmented data set 21 based on at least one of similarity or reliability of the 3D pose augmented data 320 included in the obtained augmented data set 21 in operation S930.

As an example, the processor 120 may obtain a distribution function of the plurality of pieces of 3D pose data 220 included in the first training data set 11, and obtain a distribution probability value of the plurality of pieces of 3D pose augmented data 320 included in the augmented data set 21 for the first training data set 11 based on the obtained distribution function. Here, the similarity may be identified to be higher as the distribution probability value is higher.

The processor 120 may identify only pieces of 3D pose augmented data 320 wherein the distribution probability value is smaller than a predetermined value among the plurality of pieces of 3D pose augmented data 320.

As an example, the processor 120 may obtain each of a plurality of pieces of 3D pose output data 420 corresponding to each of the pieces of 2D pose augmented data 310 by inputting each of the plurality of pieces of 2D pose augmented data 310 included in the augmented data set 21 into the first neural network model 41, and identify the reliability of each of the pieces of 3D pose augmented data 320 corresponding to each of the plurality of pieces of 2D pose augmented data 310 based on the obtained plurality of pieces of 3D pose output data 420.

In particular, the processor 120 may identify an error between 3D pose output data 420 and 3D pose augmented data 320 corresponding to the same 2D pose augmented data 310, and identify that the reliability of each of the pieces of 3D pose augmented data 320 is higher as the identified error is smaller.

Meanwhile, the processor 120 may select only pieces of 3D pose augmented data 320 wherein the error is smaller than a predetermined second value among the plurality of pieces of 3D pose augmented data 320.

The processor 120 selects 3D pose augmented data, and then obtains a second training data set 12 including, in pairs, the selected 3D pose augmented data 320 and 2D pose augmented data 310 corresponding to the selected 3D pose augmented data 320 included in the augmented data set 21 in operation S940. Here, the second data set 12 may correspond to augmentation of the first training data set 11 in a scale of 1.29 times.

Then, the processor 120 retrains the first neural network model 41 based on the obtained second training data set 12 in operation S950.

Afterwards, the processor 120 may obtain an image including an object, and obtain 2D pose data 210 corresponding to the image by inputting the image into a second neural network model 42 trained to estimate 2D pose data 210 of an object in the image.

Then, the processor 120 may obtain 3D pose data 220 corresponding to the 2D pose data 210 by inputting the obtained 2D pose data 210 into the retrained first neural network model 41, and identify a pose of the object in the image based on the obtained 3D pose data 220.

In the aforementioned explanation, the operations S910 to S950 may be further divided into additional steps, or combined in fewer steps according to the embodiments of the disclosure. Also, some steps may be omitted depending on needs, or the order among the steps may be changed.

Meanwhile, the methods according to the aforementioned various embodiments of the disclosure may be implemented in forms of applications that can be installed on conventional electronic devices. Alternatively, the methods according to the aforementioned various embodiments of the disclosure may be performed by using a trained neural network based on deep learning (or a deeply trained neural network), i.e., a learning network model. Also, the methods according to the aforementioned various embodiments of the disclosure may be implemented just with software upgrade, or hardware upgrade for a conventional electronic device. In addition, the aforementioned various embodiments of the disclosure may be performed through an embedded server provided on an electronic device, or an external server of an electronic device.

Meanwhile, according to an embodiment of the disclosure, the aforementioned various embodiments may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term `non-transitory' only means that a storage medium does not include signals, and is tangible, but does not distinguish whether data is stored in the storage medium semi-permanently or temporarily.

Also, according to an embodiment, the methods according to the aforementioned various embodiments may be provided while being included in a computer program product. A computer program product refers to a product, and it can be traded between a seller and a buyer. A computer program product can be distributed in the form of a storage medium that is readable by machines (e.g.: a compact disc read only memory (CD-ROM)), or distributed on-line through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components (e.g.: a module or a program) according to the aforementioned various embodiments may consist of a singular object or a plurality of objects. In addition, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner. Further, operations performed by a module, a program, or other components according to the various embodiments may be executed sequentially, in parallel, repetitively, or heuristically. Or, at least some of the operations may be executed in a different order or omitted, or other operations may be added.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic device comprising:
memory storing a first training data set including, in pairs, a plurality of pieces of 2D pose data and a plurality of pieces of 3D pose data corresponding to each of the plurality of pieces of 2D pose data; and
one or more processors training a first neural network model to estimate 3D poses based on the first training data set,
wherein the one or more processors are configured to:
obtain an augmented data set by augmenting the first training data set,
based on at least one of similarity or reliability of 3D pose augmented data included in the obtained augmented data set, select at least one piece of 3D pose augmented data among a plurality of pieces of 3D pose augmented data included in the augmented data set,
obtain a second training data set including, in pairs, the selected 3D pose augmented data and 2D pose augmented data corresponding to the selected 3D pose augmented data included in the augmented data set, and
retrain the first neural network model based on the obtained second training data set.

2. The electronic device of claim 1,
wherein the one or more processors are configured to:
obtain a distribution function of the plurality of pieces of 3D pose data included in the first training data set, obtain a distribution probability value of the plurality of pieces of 3D pose augmented data included in the augmented data set for the first training data set based on the obtained distribution function, and identify the similarity to be higher as the distribution probability value is higher.

3. The electronic device of claim 2,
wherein the one or more processors are configured to:
select pieces of 3D pose augmented data wherein the distribution probability value is smaller than a predetermined first value among the plurality of pieces of 3D pose augmented data.

4. The electronic device of claim 1,
wherein the one or more processors are configured to:
obtain each of a plurality of pieces of 3D pose output data corresponding to each of the pieces of 2D pose augmented data by inputting each of the plurality of pieces of 2D pose augmented data included in the augmented data set into the first neural network model, and
identify the reliability of each of the pieces of 3D pose augmented data corresponding to each of the plurality of pieces of 2D pose augmented data based on the obtained plurality of pieces of 3D pose output data.

5. The electronic device of claim 4,
wherein the one or more processors are configured to:
identify an error between 3D pose output data and 3D pose augmented data corresponding to the same 2D pose augmented data, and identify that the reliability of each of the pieces of 3D pose augmented data is higher as the identified error is smaller, and select pieces of 3D pose augmented data wherein the error is smaller than a predetermined second value among the plurality of pieces of 3D pose augmented data.

6. The electronic device of claim 1,
wherein the 2D pose data includes 2D coordinate information for each of a plurality of joints constituting an object, and the 3D pose data includes 3D coordinate information for each of the plurality of j oints constituting the object, and
the one or more processors augment the first training data set by exchanging 3D coordinate information for at least one same joint among the plurality of pieces of 3D pose data.

7. The electronic device of claim 1,
wherein the one or more processors are configured to:
obtain an image including an object, obtain 2D pose data corresponding to the image by inputting the image into a second neural network model trained to estimate 2D pose data of an object in the image, obtain 3D pose data corresponding to the 2D pose data by inputting the obtained 2D pose data into the retrained first neural network model, and identify a pose of the object in the image based on the obtained 3D pose data.

8. The electronic device of claim 1,
wherein the second data set corresponds to augmentation of the first training data set in a scale of 1.29 times.

9. A control method for an electronic device, the method comprising:
training a first neural network model to estimate 3D poses based on a first training data set including, in pairs, a plurality of pieces of 2D pose data and a plurality of pieces of 3D pose data corresponding to each of the plurality of pieces of 2D pose data;
obtaining an augmented data set by augmenting the first training data set;
based on at least one of similarity or reliability of 3D pose augmented data included in the obtained augmented data set, selecting at least one piece of 3D pose augmented data among a plurality of pieces of 3D pose augmented data included in the augmented data set;
obtaining a second training data set including, in pairs, the selected 3D pose augmented data and 2D pose augmented data corresponding to the selected 3D pose augmented data included in the augmented data set; and
retraining the first neural network model based on the obtained second training data set.

10. The control method of claim 9, comprising:
obtaining a distribution function of the plurality of pieces of 3D pose data included in the first training data set; and
obtaining a distribution probability value of the plurality of pieces of 3D pose augmented data included in the augmented data set for the first training data set based on the obtained distribution function,
wherein the similarity is identified to be higher as the distribution probability value is higher.

11. The control method of claim 10,
wherein the selecting comprises:
selecting pieces of 3D pose augmented data wherein the distribution probability value is smaller than a predetermined value among the plurality of pieces of 3D pose augmented data.

12. The control method of claim 9, comprising:
obtaining each of a plurality of pieces of 3D pose output data corresponding to each of the pieces of 2D pose augmented data by inputting each of the plurality of pieces of 2D pose augmented data included in the augmented data set into the first neural network model; and
identifying the reliability of each of the pieces of 3D pose augmented data corresponding to each of the plurality of pieces of 2D pose augmented data based on the obtained plurality of pieces of 3D pose output data.

13. The control method of claim 12,
wherein the identifying the reliability comprises:
identifying an error between 3D pose output data and 3D pose augmented data corresponding to the same 2D pose augmented data, and identifying that the reliability of each of the pieces of 3D pose augmented data is higher as the identified error is smaller, and
the selecting comprises:
selecting pieces of 3D pose augmented data wherein the error is smaller than a predetermined second value among the plurality of pieces of 3D pose augmented data.

14. The control method of claim 9,
wherein the 2D pose data includes 2D coordinate information for each of a plurality of joints constituting an object, and the 3D pose data includes 3D coordinate information for each of the plurality of j oints constituting the object, and
the obtaining the augmented data set comprises:
augmenting the first training data set by exchanging 3D coordinate information for at least one same joint among the plurality of pieces of 3D pose data.

15. The control method of claim 9, comprising:
obtaining an image including an object;
obtaining 2D pose data corresponding to the image by inputting the image into a second neural network model trained to estimate 2D pose data of an object in the image;
obtaining 3D pose data corresponding to the 2D pose data by inputting the obtained 2D pose data into the retrained first neural network model; and
identifying a pose of the object in the image based on the obtained 3D pose data.
